# EUROPEAN PATENT SPECIFICATION

(11) **EP 3 551 537 B1**
(45) Date of publication and mention of the grant of the patent: **26.10.2022**
(21) Application number: 17878477.3
(22) Date of filing: 31.10.2017
(51) Int. Cl.: F02K 3/115, F02C 6/08, F02C 9/18

(54) **AIRCRAFT AND METHOD FOR SUPPLYING ENGINE AIR TO AN ENVIRONMENTAL CONTROL SYSTEM**
FLUGZEUG UND VERFAHREN ZUR ZUFUHR VON TRIEBWERKSLUFT AN EIN KLIMAREGELUNGSSYSTEM
AÉRONEF ET PROCÉDÉ D'ALIMENTATION EN AIR MOTEUR D'UN SYSTÈME DE CLIMATISATION D'AÉRONEF

(30) Priority: 09.12.2016 US 201662432110 P; 01.08.2017 US 201715665860
(43) Date of publication of application: 16.10.2019
(73) Proprietor: Raytheon Technologies Corporation, Farmington, CT 06032 (US)
(72) Inventor: SCHWARZ, Frederick M., Glastonbury, Connecticut 06033 (US); SUCIU, Gabriel L., Glastonbury, Connecticut 06033 (US); MERRY, Brian, Andover, Connecticut 06232 (US); LENTS, Charles E., Amston, Connecticut 06231 (US); TAYLOR, Steven H., East Hartford, Connecticut 06108 (US)
(74) Representative: Dehns
(86) International application number: PCT/US2017/059150
(87) International publication number: WO 2018/106359

(56) References cited:
- EP-A1- 0 459 815
- EP-A1- 2 960 467
- US-A1- 2006 162 371
- US-A1- 2012 216 545
- US-A1- 2012 216 545
- US-A1- 2014 196 469
- US-A1- 2015 354 464
- US-A1- 2016 061 056
- US-B1- 6 189 324

## Description

### BACKGROUND OF THE INVENTION

The present disclosure relates generally to aircraft air systems, and more specifically to an air circuit for providing air to an environmental control system.

Aircraft, such as commercial airliners, typically include multiple gas turbine engines configured to generate thrust. The gas turbine engines include a compressor section that compresses air, a combustor section that mixes the air with a fuel and ignites the mixture, and a turbine section across which the resultant combustion products are expanded.

As the compressor section draws in atmospheric air and compresses it, the air from the compressor section is suitable for provision to the environmental control system (ECS) of the aircraft. The ECS system supplies air for various applications on the aircraft. As an example, it supplies conditioned cabin air for the passenger cabin and the cockpit. As such, it must be a particular pressure and temperature.

In existing ECS configurations, air is bled from the compressor section at a temperature and a pressure in excess of the temperature and pressure required by the ECS and is conditioned to reduced temperature using a pre-cooler and to reduced pressure using a pressure regulating valve. In this manner, pressure in excess of that required by the ECS is dumped across the pressure regulating valve. The excess pressure dump results in an overall efficiency loss to the engine.

As part of the typical ECS system, the air downstream of the gas turbine engine is passed through an air cycle machine. In an air cycle machine, the compressed air tapped from the engine compressor is typically cooled by ram air, compressed to high pressure and temperature, cooled to low temperature and high pressure again by ram air, and expanded across a turbine (which drives the air cycle compressor) to create cold air at cabin pressure. Thus the air cycle machine requires only a moderate pressure to operate (as air is further compressed in the machine), while the engine bleed pressure can be well in excess of moderate pressure in many operation points.

Of course, during operation of a gas turbine engine during flight condition, the power supplied by the engine changes dramatically. In prior art systems, operating at high power, the air is at an undesirably high pressure. On the other hand, at certain low power conditions, the air from any one tap might be at an undesirably low pressure.

As such, the prior art has not been efficient.

It is well known that fuel efficiency is a driving force in modern aircraft engine design. The increase of even a small percent of fuel burn efficiency is a very valuable goal.

US 2012/216545 A1 discloses a prior art environmental control system supply precooler bypass.

EP 2 960 467 A1 discloses a prior art engine bleed supply with a low pressure environmental control system.

### SUMMARY

In accordance with a first aspect of the invention, there is provided an aircraft as claimed in claim 1.

In another embodiment according to the previous embodiment, at least one auxiliary compressor comprises a plurality of auxiliary compressors.

In another embodiment according to any of the previous embodiments, at least one of the compressor bleeds is a compressor bleed positioned between a low pressure compressor and a high pressure compressor.

In another embodiment according to any of the previous embodiments, the intercooler is an air to air heat exchanger, and cooled by fan air from a fan in an associated gas turbine engine.

In another embodiment according to any of the previous embodiments, the intercooler is mounted in an outer fan case.

In another embodiment according to any of the previous embodiments, the intercooler is mounted within a bypass duct.

In another embodiment according to any of the previous embodiments, the intercooler is mounted within a core engine housing.

In another embodiment according to any of the previous embodiments, the intercooler is located in an upper bifurcation.

In another embodiment according to any of the previous embodiments, the intercooler is located in a lower bifurcation.

In another embodiment according to any of the previous embodiments, a second valve is between the intercooler and the at least one auxiliary compressor, the controller also controls the second valve such that the controller controls a state of the selection valve and a state of the second valve.

In another embodiment according to any of the previous embodiments, the controller includes memory storing instructions configured to cause the controller to connect at least one of the bleeds having an ECS operating requirement.

In another embodiment according to any of the previous embodiments, at least one auxiliary compressor comprises a plurality of auxiliary compressors and wherein the controller includes a memory storing instructions configured to cause the control to alternate auxiliary compressors operating as a primary compressor on a per flight basis.

In another embodiment according to any of the previous embodiments, a low pressure spool including a fan drive turbine, for driving a fan rotor, provides power to drive the at least one auxiliary compressor.

In another embodiment according to any of the previous embodiments, the rotation of the low pressure spool creates electricity in an associated generator which is then provided to drive a motor the at least one auxiliary compressor.

In another embodiment according to any of the previous embodiments, the low pressure spool includes a takeoff shaft for mechanically driving a drive to the at least one auxiliary compressor.

In accordance with a second aspect of the present invention, there is provided a method for supplying engine air to an environmental control system (ECS) as claimed in claim 15.

In accordance with another aspect of the disclosure, a system for use on a turbine engine powered aircraft to provide conditioned air to an environmental control system has a heat exchanger having an input and an output. A selection valve is configured to selectively connect the heat exchanger input to at least one bleed of a compressor of the turbine engine. At least one auxiliary compressor is connected to the heat exchanger output, wherein an output of the at least one auxiliary compressor is connected to an input of the environmental control system. A controller is configured to receive contemporaneous operational data, calculate minimum configuration requirements to satisfy environmental demands, and transmit calculated configuration requirements to at least the selection valve to achieve a desired pressure and temperature for the air downstream of the auxiliary compressor.

These and other features can be best understood from the following specification and drawings, of which the following is a brief description.

### BRIEF DESCRIPTION OF THE DRAWINGS

Figure 1 illustrates an exemplary gas turbine engine.
Figure 2 schematically illustrates an electro-pneumatic environmental control system (ECS) air circuit for an aircraft.
Figure 3 shows one embodiment of an auxiliary boost compressor.
Figure 4A schematically shows a gas turbine engine having an alternative drive.
Figure 4B shows an alternative drive.
Figure 5 shows one location for a heat exchanger.
Figure 6 shows an alternative location for the heat exchanger.
Figure 7 shows yet another alternative location.
Figure 8A shows a pair of optional alternative locations for a heat exchanger.
Figure 8B is a view along Line B-B of Figure 8A.
Figure 8C shows a heat exchanger in a bifurcation location.
Figure 8D shows another view of the Figure 8C heat exchanger. Figure 8D is generally at 90° relative to Figure 8C.

### DETAILED DESCRIPTION

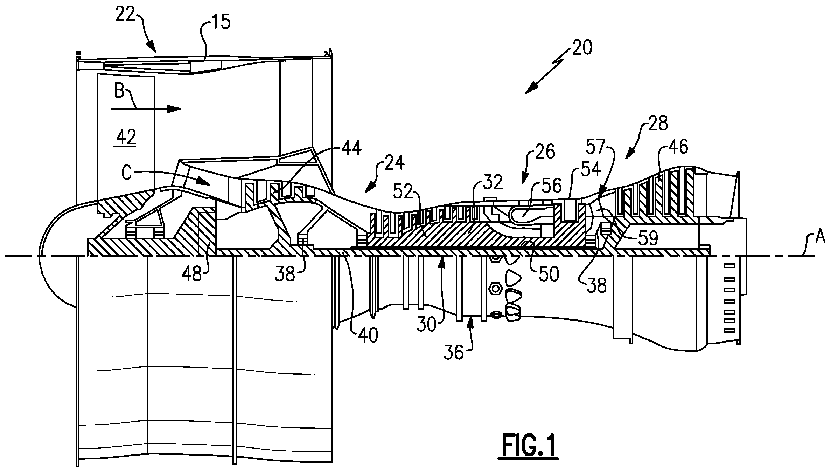

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 meters). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)^{0.5}, where °R=°K^{∗}9/5. The "Low corrected fan tip speed" as disclosed herein according to one non-limiting embodiment is less than about 1150 ft / second (350.5 m/s).

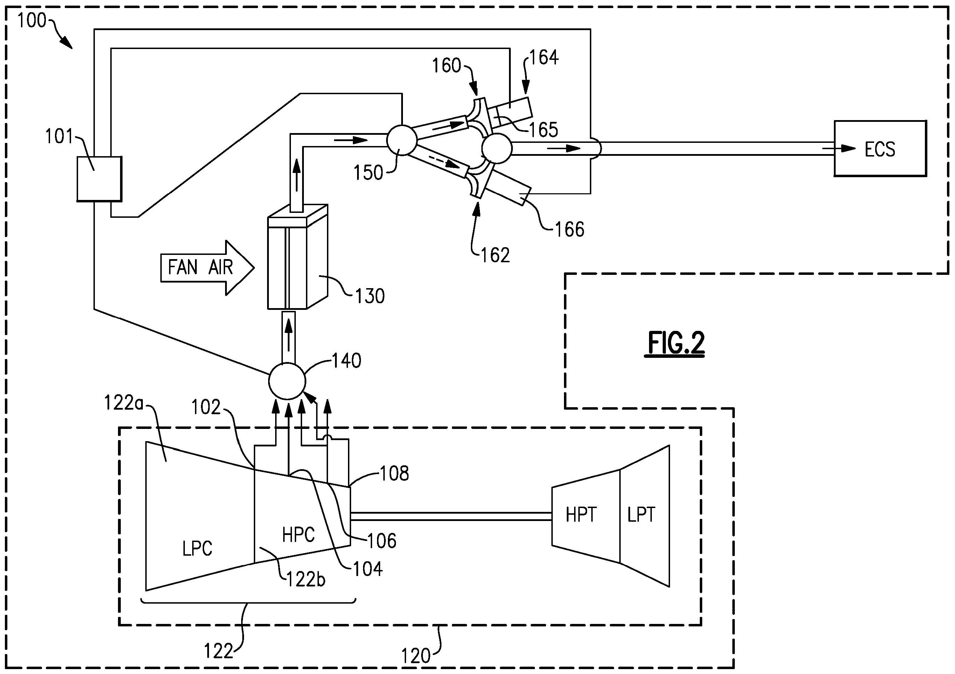

In order to provide air from the compressor section 24 to the aircraft environmental control system (ECS), multiple bleeds are incorporated in the compressor section 24 (illustrated schematically in Figure 2). Each of the bleeds withdraws air from the compressor section 24 at a given compressor stage according to known aircraft bleed techniques and using known bleed apparatuses. Contemporary aircraft systems for providing air to an ECS bleed air from a stage sufficiently pressurized to meet a required flow rate of the ECS. Bleeding at these stages, however, necessitates bleeding air at a pressure that is in excess of a maximum allowable temperature for the ECS. In order to reduce the temperature, a pre-cooler heat exchanger is positioned in the air circuit and reduces the temperature of the bleed air before the bleed air is provided to the ECS. Upstream of the ECS, the excess pressure is dumped such as by a pressure regulating valve, resulting in air provided that meets the temperature, pressure and flow requirements. Pressurization of the air passing through the compressor section 24 requires energy, and the provision of excess pressure to the ECS constitutes waste, and decreases the efficiency at which the engine 20 can be operated.

Figure 2 schematically illustrates an aircraft 10, including an electro-pneumatic ECS air circuit 100 that reduces the inefficiencies associated with providing air from the engine compressor to an ECS. The electro-pneumatic ECS air circuit 100 includes multiple bleeds 102, 104, 106, 108 within a compressor section 122 of an engine 120. Each of the bleeds 102, 104, 106, 108 is connected to an intercooler 130 via a selection valve 140. The intercooler 130 operates as a heat exchanger to cool the bleed air. In the exemplary illustration, the bleeds 102, 104, 106, 108 are positioned at an inter-compressor stage between a low pressure compressor 122a, and a high pressure compressor 122b (bleed 102), and at a high pressure compressor 122b third stage (bleed 104), 6^{th} stage (bleed 106), and 8^{th} stage (bleed 108). In alternative example engines, the bleed locations can be positioned at, or between, alternative compressor stages, depending on the specific flow, temperature, and pressure requirements of the aircraft incorporating the engine 120. In yet further alternative example engines 120, alternative numbers of bleeds can be utilized depending on the specific requirements of the aircraft.

An aircraft controller 101 controls a selection valve 140 such that, at any given time, air is provided from a bleed 102, 104, 106, 108 having the appropriate flow requirements of the ECS at the current operating conditions of the aircraft. While the bleed 102, 104, 106, 108 selected by the controller 101 provides air at acceptable flow levels, the bleed 102, 104, 106, 108 is selected to provide air that is under pressured. In other words, the pressure of the air provided by the selected bleed 102, 104, 106, 108 is below the pressure required by the ECS. Further, the air selected generally exceeds the temperature requirements of the ECS.

After passing through the selection valve 140, the air is passed to the intercooler 130. The intercooler 130 is a heat exchanger that cools the bleed air prior to providing the air to the ECS. The exemplary intercooler 130 utilizes fan air, provided from the bypass flowpath of the engine 120, to cool the air in an air to air heat exchanger format.

Cooled air from the intercooler 130 is provided to a second valve 150. The second valve 150 is controlled by the aircraft controller 101 and provides air to a first auxiliary compressor 160, a second auxiliary compressor 162, or both the first and second auxiliary compressor 160, 162. Each of the auxiliary compressors 160, 162 is driven by a corresponding electric motor 164, 166 and raises the pressure of the air to a required pressure level for provision to the ECS. Also, the controller 101 is shown controlling both motors 164/166. In alternative examples, one or both of the electric motors 164, 166 can be supplemented by a mechanical motor.

Once pressurized via the auxiliary compressors 160, 162 the air is provided to the ECS. In alternative examples, a single auxiliary compressor 160 can be used in place of the first and second auxiliary compressors 160, 162. In yet further alternative examples, three or more auxiliary compressors can be included, with the controller 101 rotating between the auxiliary compressors as necessary.

By cooling the bleed air prior to providing the bleed air to auxiliary compressors 160, 162, the amount of work required to compress the air at the auxiliary compressor 160, 162 is reduced, thereby achieving a fuel efficiency savings relative to not cooling the air before the auxiliary compressors.

Controller 101 may include memory storing instructions configured to cause the controller to connect a bleed having a required flowrate and pressure for an ECS operating requirement, and wherein the connected bleed has a pressure requirement below a pressure requirement of the ECS inlet.

It should be understood the controller is programmed to achieve a desired pressure and temperature which may vary with the demand for the ECS system, and which may also vary based upon the operating condition of the gas turbine engine. The controller is operable to control valve 140, valve 150, and the compressor 160/162. In addition, an optional variable speed transmission 165 may be provided such that the speed of the auxiliary compressor 160 can be controlled to achieve the desired conditions.

The controller is scheduled to understand the pressure required at the ECS inlet for various flight conditions. It selects the appropriate bleed port that supplies the highest pressure that is below the ECS required pressure. Power is supplied to the compressor such that the resultant pressure meets requirements. In some operating modes (descent or failure modes), the controller may select a pressure in excess of the ECS demand and use a regulating valve to reduce the pressure. This would not be a normal operating mode as it is contrary to the system goal (not to waste energy), but may be used to provide fail safe operation for failure conditions, or conditions like descent where very little fuel is burned (and thus there is not much of an opportunity for fuel burn reduction). Such operation will simplify the system design without compromising typical mission fuel burn reduction.

The aircraft 10 could be said to include a gas turbine engine having a compressor section including at least one compressor bleed. An environment control system (ECS) has an air input configured to receive pressurized cabin air. An intercooler has an input and an output. A selection valve is configured to selectively connect the bleed to the intercooler input. At least one auxiliary compressor is connected to the intercooler output. An output of the at least one auxiliary compressor is connected to the ECS air input. A controller is configured to receive contemporaneous operational data, calculate minimum configuration requirements to satisfy environmental demands, and transmit calculated configuration requirements to at least the selection valve to achieve a desired pressure and temperature for the air downstream of the auxiliary compressor.

The operational data may include engine performance demands and/or atmospheric data, as well as other conditions as appropriate. The environmental demands may be as known in the aircraft art.

While the circuit 100 is illustrated in Figure 2 with a single engine 120, a similar circuit can be utilized with multiple engines 120, with the air from the bleeds 102, 104, 106, 108 of each engine 120, being mixed after being cooled in a corresponding intercooler 130. Alternatively, the air from each engine 120 can be mixed at alternate positions in the ECS air circuit 100 prior to provision to auxiliary compressors 160, 162.

In the exemplary circuit 100 only one of the auxiliary compressors 160, 162 may be required to provide sufficient pressurization to the ECS during standard operating conditions. As such, only a single auxiliary compressor 160, 162 is typically operated during a flight. In order to even out wear between the auxiliary compressors 160, 162 the primary operating auxiliary compressor 160, 162 is alternated between flights on a per flight basis. Alternating between auxiliary compressors 160, 162 further allows earlier detection, and correction, of a damaged or inoperable second auxiliary compressor 162.

The controller may also include memory storing instructions configured to cause the controller to alternate auxiliary compressors operating as a primary compressor on a per flight basis.

During flight, should one engine 120 shut down, either due to mechanical failure, or for any other reason, the air provided from the bleeds 102, 104, 106, 108, is reduced. By way of example, if there are two engines 120, and one shuts down, the air provided to the auxiliary compressors 160, 162 is cut by 2/3 of the normal flow. In order to remedy this, in the exemplary system when one engine 120 shuts down, the currently inactive auxiliary compressor 160, 162 begins operating simultaneously with the currently operating auxiliary compressor 160, 162. The simultaneous operations ensure that any lost pressure due to the loss of an engine is compensated for using air from the operating engine or engines. In aircraft having more than two auxiliary compressors 160, 162, the controller 101 can apply a proportional control to one or more of the auxiliary compressors to ensure that adequate pressure is maintained at the ECS in proportion to the pressure lost due to the lack of operation of the engine. Again, the controller 101 is programmed to achieve this control.

A disclosed system for use on a turbine engine powered aircraft provides conditioned air to an environmental control system. A heat exchanger has an input and an output. A selection valve is configured to selectively connect the heat exchanger input to at least one bleed of a compressor of the turbine engine. At least one auxiliary compressor is connected to the heat exchanger output. An output of the at least one auxiliary compressor is connected to an input of the environmental control system. A controller is configured to receive contemporaneous operational data, calculate minimum configuration requirements to satisfy environmental demands, and transmit calculated configuration requirements to at least the selection valve to achieve a desired pressure and temperature for the air downstream of the auxiliary compressor.

A method for supplying engine air to an environmental control system (ECS) includes selecting a compressor bleed from a plurality of compressor bleeds, the selected compressor bleed providing air at a higher temperature than a required ECS inlet air temperature maximum and at a lower pressure than a required ECS inlet air pressure, cooling the bleed air from the selected bleed using an intercooler such that the bleed air is below the required ECS inlet air temperature maximum, including the bleed air using at least one auxiliary compressor such that the bleed air is at least the required ECS inlet air pressure, and providing the cooled compressed bleed air to an ECS air inlet.

While certain drive connections are disclosed above for the auxiliary compressor 160/162, it should also be understood that a hydraulic drive may be utilized.

It should be understood that the embodiments shown in Figures 2-8 can be utilized in an engine as disclosed in Figure 1.

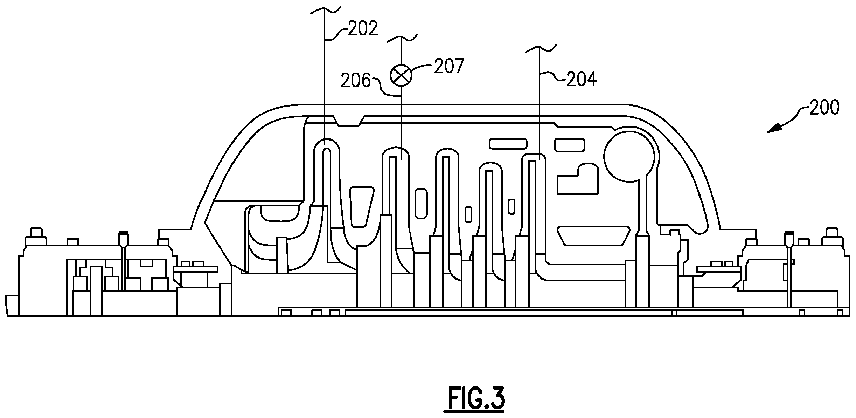

One example auxiliary compressor 200 is illustrated in Figure 3. As shown, a centrifugal compressor may be utilized having an inlet 202, and an outlet 204. Optional intermediate offtakes or taps 206 may be provided to achieve intermediate temperature and pressure requirements. The intermediate offtake 206 is provided with a valve 207, shown schematically. The controller 101 may control the valve 207 such that this intermediate air can be directed to the ECS system under certain conditions. This is one method for tuning the compressor pressure to provide just what is needed by the air cycle machine. The compressor motor power and speed can also be controlled to provide the desired pressure. Again, the controller may be programmed to be able to identify when such an option might be valuable.

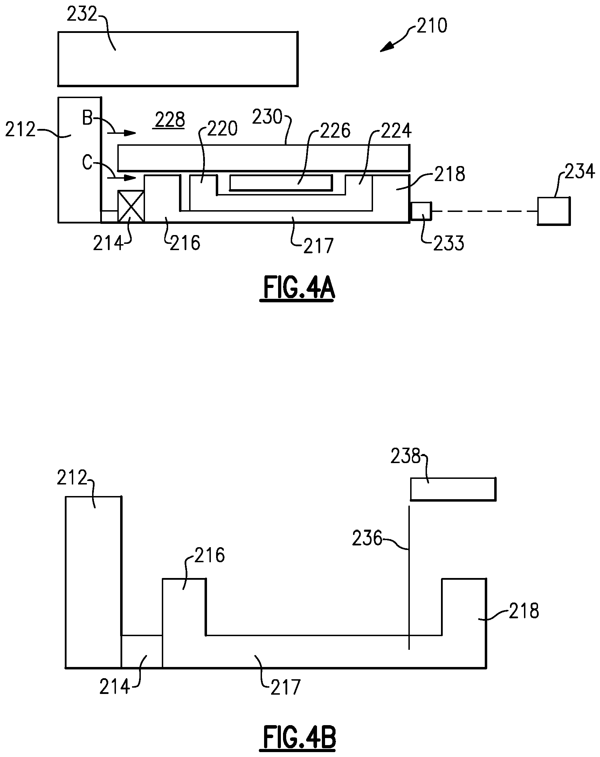

Figure 4A shows an alternative drive 210.

Figure 4A shows an embodiment 210 of an engine similar to that shown in Figure 1. A fan rotor 212 is driven by a gear reduction 214. A low pressure compressor 216 is driven by a shaft 217 driven by a fan drive turbine 218. The fan drive turbine 218 drives the compressor at a common speed, and drives the fan rotor 212 at a reduced speed due to the gear reduction 214.

A high pressure compressor 220 is driven by a high pressure turbine 224. A combustor 226 is intermediate the two.

A bypass duct 228 is shown. As known, the fan rotor delivers air into the bypass duct 228 as bypass air B and also into a core engine as core air flow C. The core engine is defined by a core engine housing 230. A fan case 232 sits outwardly of the fan rotor 212.

In the embodiment of Figure 4A, a low speed spool defined by the shaft 217 and fan drive turbine 218 drives a generator 233 to create electrical power to power the auxiliary compressor(s) 234 for the ECS system.

In an alternative embodiment shown in Figure 4B, a takeoff shaft 236 is mechanically driven by the low spool (low spool includes turbine 218, shaft 217, and compressor 216). The takeoff shaft 236 in turn may be utilized to power the auxiliary compressor 238 for the ECS system, as through appropriate gear connections.

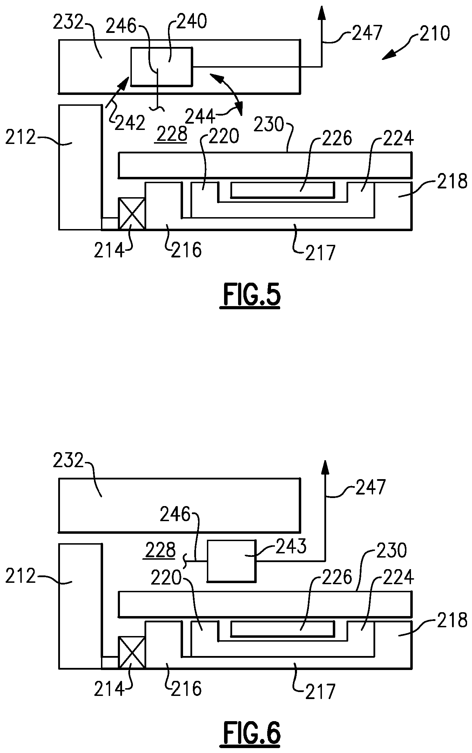

Figure 5 shows an engine embodiment wherein the heat exchanger 240 is mounted within the fan case 232. As shown, a tap 242 would bring in air from the bypass duct, and an outlet 244 delivers the bypass air outwardly of the fan case 232, after it has cooled the air in the heat exchanger 240. As shown, connections 246 will connect the compressor taps to the heat exchanger 240. Line 247 connects the tapped air to the upstream portions of a system such as shown in Figure 2.

Figure 6 shows yet another embodiment. In this embodiment, the heat exchanger 243 is mounted within the bypass duct 228. Again, it will be cooled by the fan air in the bypass duct 228.

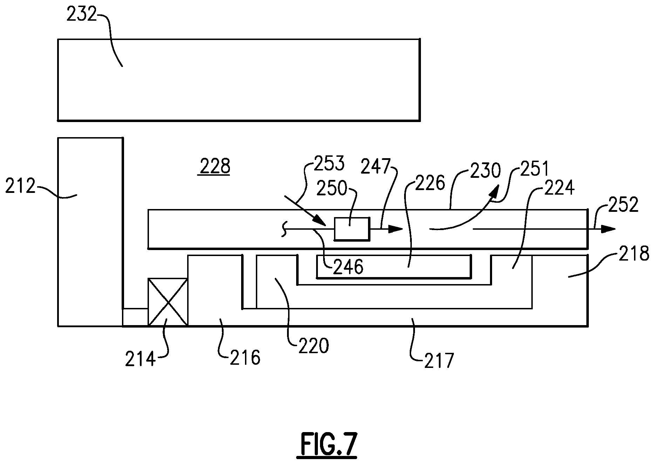

Figure 7 shows yet another embodiment wherein the heat exchanger 250 is mounted within the core engine housing 230. As shown, bypass air is tapped at 253 into the housing to cool the heat exchanger 250. The air is shown exiting at point 251 and point 252, which are optional exits. At point 251, it will provide some propulsion. At point 252, it may allow some reduction in the size of the engine.

Finally, the heat exchanger may be mounted externally from the engine, closer to the location of the auxiliary compressors, using either cooling air bled from the engine fan duct, or ram air.

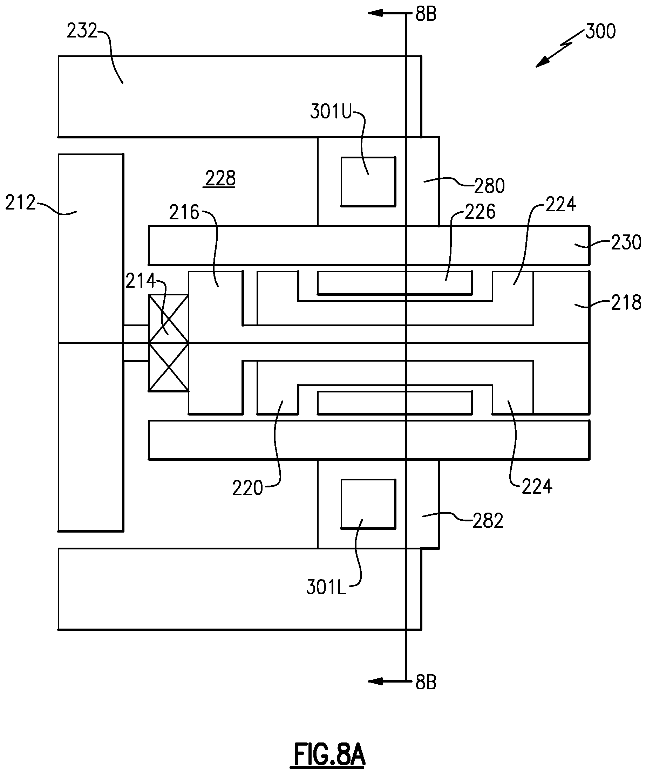

Figure 8A shows an embodiment 300 wherein the heat exchanger is located in either an upper bifurcation location 301u or a lower bifurcation location 301L. In this embodiment, the bifurcations 280 and 282 are shown schematically.

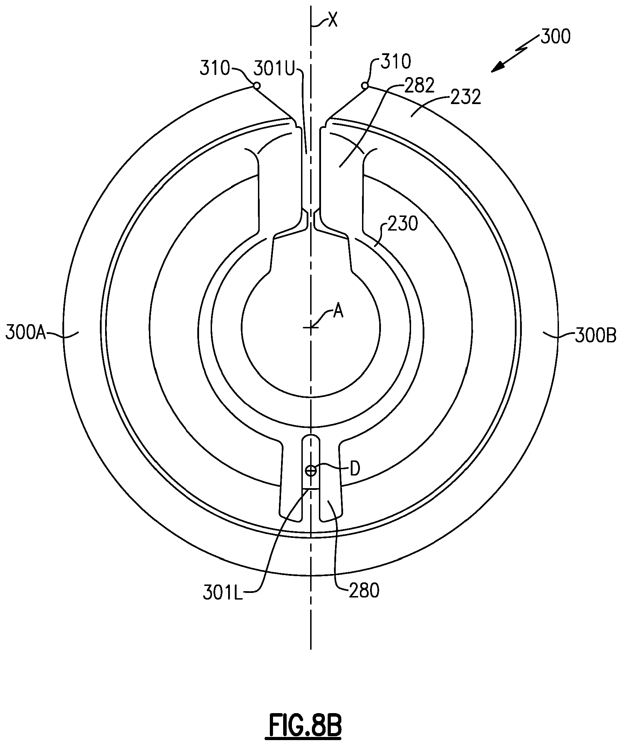

Figure 8B shows the bifurcations 301u/L. The fan case 232 and the inner core housing 230 pivot about pivot points 310 to allow access to internal components. The bifurcations 280 and 282 are essentially a space provided by the two halves 300A and 300B of the embodiment which pivot away from each other.

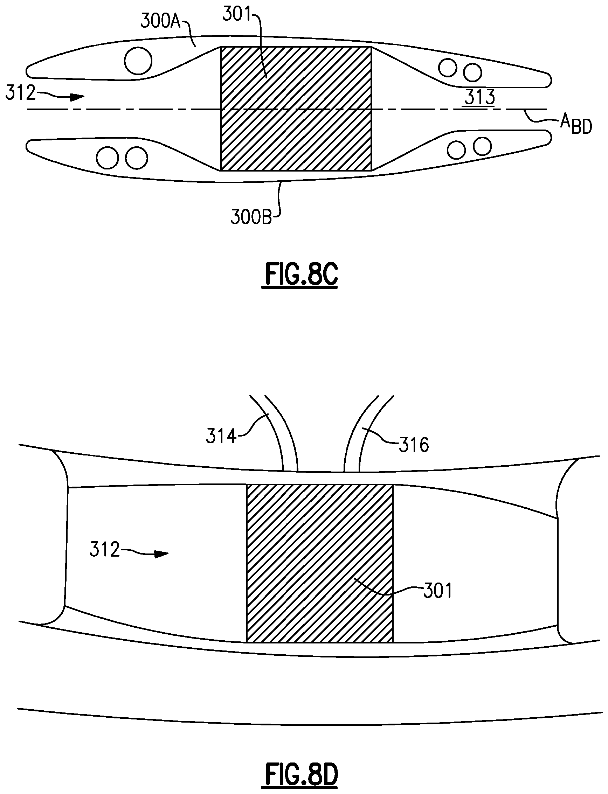

Figure 8C is a view showing the location 301 in a bifurcation between the sides 300A and 300B. A fan air inlet 312 is shown, as is a fan air exit 313.

Figure 8D is a view perpendicular to the Figure 8C location and shows the similar structure. As shown, connections 314 and 316 provide the tapped air to the heat exchanger 301, and take away the cooled air. It should be appreciated that the structure showing Figure 8C or Figure 8D can be in either the upper or lower bifurcation.

The following claims should be studied to determine the true scope and content of this disclosure.

## Claims

1. An aircraft comprising:
a gas turbine engine (20, 120) including a compressor section (24, 122), the compressor section (24, 122) including a plurality of compressor bleeds (102, 104, 106, 108);
an environmental control system (ECS) having an air input configured to receive pressurized cabin air;
an intercooler (130) having an input and an output;
a selection valve (140) configured to selectively connect at least one of said plurality of compressor bleeds (102, 104, 106, 108) to said intercooler (130) input; and
at least one auxiliary compressor (160, 162, 234, 238) connected to said intercooler (130) output, wherein an output of the at least one auxiliary compressor (160, 162, 234, 238) is connected to said ECS air input; and
a controller (101) configured to receive contemporaneous operational data, calculate minimum configuration requirements to satisfy environmental demands, and transmit calculated configuration requirements to at least said selection valve (140) to achieve a desired pressure and temperature for the pressurized cabin air downstream of said at least one auxiliary compressor (160, 162, 234, 238);
said selection valve (140) selectively connects at least one of said plurality of bleeds (102, 104, 106, 108) to provide air to said intercooler (130) at a pressure below a desired pressure of said ECS air input;
at least one of said at least one auxiliary compressors (160, 162, 234, 238) includes an electric motor (164, 166) configured to drive rotation of the corresponding auxiliary compressor (160, 162, 234, 238); and
said controller (101) is configured to control the electric motor (164, 166) and the selection valve (140) to achieve the desired pressure and temperature for the pressurized cabin air downstream of said at least one auxiliary compressor (160, 162, 234, 238).

2. The aircraft of claim 1, wherein the at least one auxiliary compressor (160, 162, 234, 238) comprises a plurality of auxiliary compressors (160, 162, 234, 238).

3. The aircraft of claim 1 or 2, wherein at least one compressor bleed (102, 104, 106, 108) is positioned between a low pressure compressor (44, 122a, 216) and a high pressure compressor (52, 122b, 220).

4. The aircraft of any preceding claim, wherein the intercooler (130) is an air to air heat exchanger (240, 243, 250, 301), and cooled by fan air from a fan (42, 212) in an associated gas turbine engine (20, 120).

5. The aircraft of any preceding claim, wherein said intercooler (130) is mounted in an outer fan case (232).

6. The aircraft of any of claims 1 to 4, wherein the intercooler (130) is mounted within a bypass duct (228).

7. The aircraft of any of claims 1 to 4, wherein the intercooler (130) is mounted within a core engine housing (230).

8. The aircraft of any of claims 1 to 4, wherein the intercooler (130) is located in an upper bifurcation (280) or a lower bifurcation (282).

9. The aircraft of any preceding claim, further comprising a second valve (150) between said intercooler (130) and said at least one auxiliary compressor (160, 162, 234, 238), said controller (101) also controls the second valve (150) such that the controller (101) controls a state of the selection valve (140) and a state of the second valve (150).

10. The aircraft of claim 9, wherein the controller (101) includes memory storing instructions configured to cause the controller (101) to connect at least one of said bleeds (102, 104, 106, 108) having an ECS operating requirement.

11. The aircraft of any preceding claim, wherein the at least one auxiliary compressor (160, 162, 234, 238) comprises a plurality of auxiliary compressors (160, 162, 234, 238) and wherein the controller (101) includes a memory storing instructions configured to cause the controller (101) to alternate auxiliary compressors (160, 162, 234, 238) operating as a primary compressor on a per flight basis.

12. The aircraft of any preceding claim, wherein a low pressure spool (30) including a fan drive turbine (46, 218), for driving a fan rotor (42, 212), provides power to drive said at least one auxiliary compressor (160, 162, 234, 238).

13. The aircraft of claim 12, wherein rotation of the low pressure spool (30) creates electricity in an associated generator (233) which is then provided to drive said at least one auxiliary compressor (160, 162, 234, 238).

14. The aircraft of claim 12, wherein said low pressure spool (30) includes a takeoff shaft (236) for mechanically driving a drive to said at least one auxiliary compressor (160, 162, 234, 238).

15. A method for supplying engine air to an environmental control system (ECS) comprising:
providing a selection valve (140) configured to selectively connect at least one of a plurality of compressor bleeds (102, 104, 106, 108) to an intercooler (130) input;
selecting a compressor bleed (102, 104, 106, 108) from the plurality of compressor bleeds (102, 104, 106, 108), the selected compressor bleed (102, 104, 106, 108) providing air at a higher temperature than a required ECS inlet air temperature maximum and at a lower pressure than a required ECS inlet air pressure;
cooling the bleed air from the selected bleed (102, 104, 106, 108) using the intercooler (130) such that the bleed air is below the required ECS inlet air temperature maximum;
compressing the bleed air using at least one auxiliary compressor (160, 162, 234, 238) such that the bleed air is at least the required ECS inlet air pressure, the at least one auxiliary compressor (160, 162, 234, 238) including an electric motor (164, 166) that drives rotation of the corresponding auxiliary compressor (160, 162, 234, 238); and
providing the cooled compressed bleed air to an ECS air inlet, wherein a controller (101) controls the electric motor (164, 166) and the selection valve (140) to achieve a desired pressure and temperature for pressurized cabin air downstream of said at least one auxiliary compressor (160, 162, 234, 238).

## Patentansprüche

1. Flugzeug, umfassend:
ein Gasturbinentriebwerk (20, 120) mit einem Kompressorabschnitt (24, 122), wobei der Kompressorabschnitt (24, 122) eine Vielzahl von Kompressorentlüftungen (102, 104, 106, 108) enthält;
ein Klimaregelungssystem (ECS) mit einem Lufteingang, der konfiguriert ist, unter Druck stehende Kabinenluft aufzunehmen; einen Zwischenkühler (130) mit einem Eingang und einem Ausgang; ein Wählventil (140), das konfiguriert ist, wahlweise mindestens eine von der Vielzahl von Kompressorentlüftungen (102, 104, 106, 108) mit dem Eingang des Zwischenkühlers (130) zu verbinden; und mindestens einen Hilfskompressor (160, 162, 234, 238), der mit dem Ausgang des Zwischenkühlers (130) verbunden ist, wobei ein Ausgang des mindestens einen Hilfskompressors (160, 162, 234, 238) mit dem ECS-Lufteingang verbunden ist; und
eine Steuerung (101), die konfiguriert ist, gleichzeitige Betriebsdaten zu empfangen, minimale Konfigurationsanforderungen zur Erfüllung von Umweltanforderungen zu berechnen und berechnete Konfigurationsanforderungen an mindestens das Wählventil (140) zu übertragen, um einen gewünschten Druck und eine gewünschte Temperatur für die unter Druck stehende Kabinenluft, dem mindestens einen Hilfskompressor (160, 162, 234, 238) nachgelagert, zu erreichen;
wobei das Auswahlventil (140) wahlweise mindestens eine der Vielzahl von Entlüftungen (102, 104, 106, 108) verbindet, um dem Zwischenkühler (130) Luft mit einem Druck unterhalb eines gewünschten Drucks des ECS-Lufteingangs zuzuführen;
wobei mindestens einer des mindestens einen Hilfskompressors (160, 162, 234, 238) einen Elektromotor (164, 166) enthält, der konfiguriert ist, die Rotation des entsprechenden Hilfskompressors (160, 162, 234, 238) anzutreiben; und
wobei die Steuerung (101) konfiguriert ist, den Elektromotor (164, 166) und das Auswahlventil (140) zu steuern, um den gewünschten Druck und die gewünschte Temperatur für die unter Druck stehende Kabinenluft, dem mindestens einen Hilfskompressor (160, 162, 234, 238) nachgelagert, zu erreichen.

2. Flugzeug nach Anspruch 1, wobei der mindestens eine Hilfskompressor (160, 162, 234, 238) eine Vielzahl von Hilfskompressoren (160, 162, 234, 238) umfasst.

3. Flugzeug nach Anspruch 1 oder 2, wobei mindestens eine Kompressorentlüftung (102, 104, 106, 108) zwischen einem Niederdruckkompressor (44, 122a, 216) und einem Hochdruckkompressor (52, 122b, 220) positioniert ist.

4. Flugzeug nach einem der vorhergehenden Ansprüche, wobei der Zwischenkühler (130) ein Luft-Luft-Wärmetauscher (240, 243, 250, 301) ist und durch Bläserluft von einem Bläser (42, 212) in einem zugeordneten Gasturbinentriebwerk (20, 120) gekühlt wird.

5. Flugzeug nach einem der vorhergehenden Ansprüche, wobei der Zwischenkühler (130) in einem äußeren Bläsergehäuse (232) montiert ist.

6. Flugzeug nach einem der Ansprüche 1 bis 4, wobei der Zwischenkühler (130) in einem Umgehungskanal (228) montiert ist.

7. Flugzeug nach einem der Ansprüche 1 bis 4, wobei der Zwischenkühler (130) in einem Kerntriebwerksgehäuse (230) montiert ist.

8. Flugzeug nach einem der Ansprüche 1 bis 4, wobei der Zwischenkühler (130) in einer oberen Verzweigung (280) oder einer unteren Verzweigung (282) montiert ist.

9. Flugzeug nach einem der vorhergehenden Ansprüche, ferner umfassend ein zweites Ventil (150) zwischen dem Zwischenkühler (130) und dem mindestens einen Hilfskompressor (160, 162, 234, 238), wobei die Steuerung (101) auch das zweite Ventil (150) steuert, sodass die Steuerung (101) einen Zustand des Wählventils (140) und einen Zustand des zweiten Ventils (150) steuert.

10. Flugzeug nach Anspruch 9, wobei die Steuerung (101) einen Speicher enthält, der Anweisungen speichert, die konfiguriert sind, die Steuerung (101) zu veranlassen, mindestens eine der Entlüftungen (102, 104, 106, 108) mit einer ECS-Betriebsanforderung zu verbinden.

11. Flugzeug nach einem der vorhergehenden Ansprüche, wobei der mindestens eine Hilfskompressor (160, 162, 234, 238) eine Vielzahl von Hilfskompressoren (160, 162, 234, 238) umfasst und wobei die Steuerung (101) einen Speicher enthält, der Anweisungen speichert, die konfiguriert sind, die Steuerung (101) zu veranlassen, Hilfskompressoren (160, 162, 234, 238) zu wechseln, die als ein Primärkompressor auf einer Pro-Flug-Basis arbeiten.

12. Flugzeug nach einem der vorhergehenden Ansprüche, wobei eine Niederdruckspule (30), die eine Bläserantriebsturbine (46, 218) zum Antreiben eines Bläserrotors (42, 212) enthält, Leistung zum Antreiben des mindestens einen Hilfskompressors (160, 162, 234, 238) bereitstellt.

13. Flugzeug nach Anspruch 12, wobei die Drehung der Niederdruckspule (30) Elektrizität in einem zugeordneten Generator (233) erzeugt, die dann bereitgestellt wird, um den mindestens einen Hilfskompressor (160, 162, 234, 238) anzutreiben.

14. Flugzeug nach Anspruch 12, wobei die Niederdruckspule (30) eine Startwelle (236) zum mechanischen Antreiben eines Antriebs zu dem mindestens einen Hilfskompressor (160, 162, 234, 238) enthält.

15. Verfahren zur Zufuhr von Triebwerksluft an ein Klimaregelungssystem (ECS), umfassend:
Bereitstellen eines Wählventils (140), das konfiguriert ist, wahlweise mindestens eine von einer Vielzahl von Kompressorentlüftungen (102, 104, 106, 108) mit dem Eingang eines Zwischenkühlers (130) zu verbinden;
Auswählen einer Kompressorentlüftung (102, 104, 106, 108) aus der Vielzahl von Kompressorentlüftungen (102, 104, 106, 108), wobei die ausgewählte Kompressorentlüftung (102, 104, 106, 108) Luft mit einer höheren Temperatur als ein erforderliches ECS-Einlasslufttemperaturmaximum und einem niedrigeren Druck als einem erforderlichen ECS-Einlassluftdruck bereitstellt;
Kühlen der Entlüftungsluft von der ausgewählten Entlüftung (102, 104, 106, 108) unter Verwendung des Zwischenkühlers (130), sodass die Entlüftungsluft unter dem erforderlichen ECS-Einlasslufttemperaturmaximum liegt;
Komprimieren der Entlüftungsluft unter Verwendung mindestens eines Hilfskompressors (160, 162, 234, 238), sodass die Entlüftungsluft mindestens den erforderlichen ECS-Einlassluftdruck aufweist, wobei der mindestens eine Hilfskompressor (160, 162, 234, 238) einen Elektromotor (164, 166) enthält, der die Rotation des entsprechenden Hilfskompressors (160, 162, 234, 238) antreibt; und
Bereitstellen der gekühlten, komprimierten Entlüftungsluft an einem ECS-Lufteinlass, wobei eine Steuerung (101) den Elektromotor (164, 166) und das Wählventil (140) steuert, um einen gewünschten Druck und eine gewünschte Temperatur für die unter Druck stehende Kabinenluft, dem mindestens einen Hilfskompressor (160, 162, 234, 238) nachgelagert, zu erreichen.

## Revendications

1. Aéronef comprenant :
un moteur à turbine à gaz (20, 120) comportant une section de compresseur (24, 122), la section de compresseur (24, 122) comportant une pluralité de purges de compresseur (102, 104, 106, 108) ;
un système de contrôle environnemental (ECS) ayant une entrée d'air configurée pour recevoir de l'air de cabine sous pression ;
un refroidisseur intermédiaire (130) ayant une entrée et une sortie ;
une soupape de sélection (140) configurée pour relier sélectivement au moins l'une de ladite pluralité de purges de compresseur (102, 104, 106, 108) à ladite entrée de refroidisseur intermédiaire (130) ; et
au moins un compresseur auxiliaire (160, 162, 234, 238) relié à ladite sortie de refroidisseur intermédiaire (130), dans lequel une sortie de l'au moins un compresseur auxiliaire (160, 162, 234, 238) est reliée à ladite entrée d'air d'ECS ; et
un dispositif de commande (101) configuré pour recevoir des données opérationnelles ponctuelles, calculer des exigences de configuration minimales pour satisfaire des demandes environnementales, et transmettre les exigences de configuration calculées à au moins ladite soupape de sélection (140) pour obtenir une pression et une température souhaitées pour l'air de cabine sous pression en aval dudit au moins un compresseur auxiliaire (160, 162, 234, 238) ;
ladite soupape de sélection (140) relie sélectivement au moins l'une de ladite pluralité de purges (102, 104, 106, 108) pour fournir de l'air audit refroidisseur intermédiaire (130) à une pression inférieure à une pression souhaitée de ladite entrée d'air d'ECS ;
au moins l'un desdits compresseurs auxiliaires (160, 162, 234, 238) comporte un moteur électrique (164, 166) configuré pour entraîner la rotation du compresseur auxiliaire correspondant (160, 162, 234, 238) ; et
ledit dispositif de commande (101) est configuré pour commander le moteur électrique (164, 166) et la soupape de sélection (140) pour obtenir la pression et la température souhaitées pour l'air de cabine sous pression en aval dudit au moins un compresseur auxiliaire (160, 162, 234, 238).

2. Aéronef selon la revendication 1, dans lequel l'au moins un compresseur auxiliaire (160, 162, 234, 238) comprend une pluralité de compresseurs auxiliaires (160, 162, 234, 238).

3. Aéronef selon la revendication 1 ou 2, dans lequel au moins une purge de compresseur (102, 104, 106, 108) est positionnée entre un compresseur basse pression (44, 122a, 216) et un compresseur haute pression (52, 122b, 220).

4. Aéronef selon une quelconque revendication précédente, dans lequel le refroidisseur intermédiaire (130) est un échangeur de chaleur air-air (240, 243, 250, 301), et refroidi par l'air de soufflante provenant d'une soufflante (42, 212) dans un moteur à turbine à gaz (20, 120) associé.

5. Aéronef selon une quelconque revendication précédente, dans lequel ledit refroidisseur intermédiaire (130) est monté dans un carter de soufflante externe (232).

6. Aéronef selon l'une quelconque des revendications 1 à 4, dans lequel le refroidisseur intermédiaire (130) est monté dans un conduit de dérivation (228).

7. Aéronef selon l'une quelconque des revendications 1 à 4, dans lequel le refroidisseur intermédiaire (130) est monté à l'intérieur d'un boîtier de moteur principal (230).

8. Aéronef selon l'une quelconque des revendications 1 à 4, dans lequel le refroidisseur intermédiaire (130) est situé dans une bifurcation supérieure (280) ou une bifurcation inférieure (282) .

9. Aéronef selon une quelconque revendication précédente, comprenant en outre une seconde soupape (150) entre ledit refroidisseur intermédiaire (130) et ledit au moins un compresseur auxiliaire (160, 162, 234, 238), ledit dispositif de commande (101) commande également la seconde soupape (150) de sorte que le dispositif de commande (101) commande un état de la soupape de sélection (140) et un état de la seconde soupape (150).

10. Aéronef selon la revendication 9, dans lequel le dispositif de commande (101) comporte une mémoire stockant des instructions configurées pour amener le dispositif de commande (101) à relier au moins une desdites purges (102, 104, 106, 108) ayant une exigence de fonctionnement d'ECS.

11. Aéronef selon une quelconque revendication précédente, dans lequel l'au moins un compresseur auxiliaire (160, 162, 234, 238) comprend une pluralité de compresseurs auxiliaires (160, 162, 234, 238) et dans lequel le dispositif de commande (101) comporte une mémoire stockant des instructions configurées pour amener le dispositif de commande (101) à alterner les compresseurs auxiliaires (160, 162, 234, 238), fonctionnant en tant que compresseur primaire, par vol.

12. Aéronef selon une quelconque revendication précédente, dans lequel un corps basse pression (30) comportant une turbine d'entraînement de soufflante (46, 218), pour entraîner un rotor de soufflante (42, 212), fournit une puissance pour entraîner ledit au moins un compresseur auxiliaire (160, 162, 234, 238).

13. Aéronef selon la revendication 12, dans lequel la rotation du corps basse pression (30) crée de l'électricité dans un générateur associé (233) qui est ensuite fournie pour entraîner ledit au moins un compresseur auxiliaire (160, 162, 234, 238).

14. Aéronef selon la revendication 12, dans lequel ledit corps basse pression (30) comporte un arbre de transmission rotor arrière (236) pour entraîner mécaniquement un entraînement audit au moins un compresseur auxiliaire (160, 162, 234, 238).

15. Procédé d'alimentation en air moteur d'un système de contrôle environnemental (ECS) comprenant :
la fourniture d'une soupape de sélection (140) configurée pour relier sélectivement au moins une d'une pluralité de purges de compresseur (102, 104, 106, 108) à une entrée de refroidisseur intermédiaire (130) ;
la sélection d'une purge de compresseur (102, 104, 106, 108) parmi la pluralité de purges de compresseur (102, 104, 106, 108), la purge de compresseur sélectionnée (102, 104, 106, 108) fournissant de l'air à une température supérieure à une température d'air d'entrée d'ECS maximale requise et à une pression inférieure à une pression d'air d'entrée d'ECS requise ;
le refroidissement de l'air prélevé de la purge sélectionnée (102, 104, 106, 108) en utilisant le refroidisseur intermédiaire (130) de sorte que l'air prélevé soit en dessous de la température d'air d'entrée d'ECS maximale requise ;
la compression de l'air prélevé en utilisant au moins un compresseur auxiliaire (160, 162, 234, 238) de sorte que l'air prélevé soit au moins à la pression d'air d'entrée d'ECS requise, l'au moins un compresseur auxiliaire (160, 162, 234, 238) comportant un moteur électrique (164, 166) qui entraîne la rotation du compresseur auxiliaire correspondant (160, 162, 234, 238) ; et
la fourniture de l'air prélevé comprimé refroidi à une entrée d'air d'ECS, dans lequel un dispositif de commande (101) commande le moteur électrique (164, 166) et la soupape de sélection (140) pour obtenir une pression et une température souhaitées pour l'air de cabine sous pression en aval dudit au moins un compresseur auxiliaire (160, 162, 234, 238).
